# EUROPÄISCHE PATENTSCHRIFT

(11) **EP 0 850 376 B1**
(45) Veröffentlichungstag und Bekanntmachung des Hinweises auf die Patenterteilung: **01.12.1999**
(21) Anmeldenummer: 96922768.5
(22) Anmeldetag: 12.07.1996
(51) Int. Cl.: F16K 27/00, F15B 13/00

(54) **ELEKTROMAGNETISCH BETÄTIGBARES PNEUMATISCHES WEGEVENTIL**
ELECTROMAGNETICALLY OPERATED DISTRIBUTION VALVE FOR A PNEUMATIC SYSTEM
DISTRIBUTEUR PNEUMATIQUE A COMMANDE ELECTROMAGNETIQUE

(30) Priorität: 15.09.1995 DE 19534285
(43) Veröffentlichungstag der Anmeldung: 01.07.1998
(73) Patentinhaber: KNORR-BREMSE Systeme für Nutzfahrzeuge GmbH, 80809 München (DE)
(72) Erfinder: HUHNEN, Gerald, D-71522 Backnang (DE)
(86) Internationale Anmeldenummer: DE9601262
(87) Internationale Veröffentlichungsnummer: WO9710459

(56) Entgegenhaltungen:
- FR-A- 2 588 935
- US-A- 4 524 797
- US-A- 4 898 203

## Beschreibung

### Stand der Technik

Die Erfindung geht aus von einem elektromagnetisch betätigbaren pneumatischen Wegeventil der im Oberbegriff des Anspruchs 1 definierten Gattung.

Solche Wegeventile werden in Nutzfahrzeugen zur Betätigung von pneumatischen Nebenverbrauchern, wie Differentialsperre, Betätigung der Motorbremse, Getriebesteuerung, Kofferklappenbetätigung bei Bussen etc., vom Fahrerhaus aus eingesetzt. Die Wegeventile sind dabei zumeist zu einem sog. Ventilblock zusammengefaßt, der an einer Druckluftversorgungsleitung angeschlossen ist. Die Anzahl der Ventile in einem Ventilblock ist durch die Anzahl der zu schaltenden pneumatischen Nebenverbraucher bestimmt.

Die Wegeventile werden sowohl als elektromagnetisch direkt betätigte Ventile als auch als elektromagnetisch vorgesteuerte Ventile ausgeführt. Bei letzteren wird von einem elektromagnetisch betätigten Vorsteuerventil ein pneumatisch betätigtes Hauptventil geschaltet. Die Verwendung beider Ventilarten im gleichen Fahrzeug ist üblich.

Bei einem bekannten Wegeventil der eingangs genannten Art (US-PS 4 524 797) sind in einem Ventilgehäuse der zum Druckluftnetzanschluß führende Zulaufkanal und der zur Entlüftung führende Entlüftungskanal miteinander fluchtend und der zum Arbeitsanschluß führende Arbeitskanal dazu rechtwinklig angeordnet. Die Magnetspule des Elektromagneten sitzt koaxial auf einem den Zulaufkanal enthaltenden zylinderförmigen Gehäuseteil des Ventilgehäuses. Der zylinderförmige Anker des Elektromagneten ist im Gehäuseinnern axial verschieblich geführt und bildet das Ventilglied, das sich wechselweise auf einen der beiden Ventilsitze aufsetzt, die an den Kanalmündungen von Zulaufkanal und Entlüftungskanal ausgebildet sind. Je nach Lage des Ventilglieds ist der Arbeitskanal mit dem Entlüftungs- oder dem Zuflußkanal verbunden. Zur Befestigung des Wegeventils an einer Trägerplatte im Kraftfahrzeug stehen von dem Ventilgehäuse Stifte ab, die sich rechtwinklig zum Zuflußkanal erstrecken. Bei der Zusammenfassung mehrerer Ventile zu einem Ventilblock werden die Ventile in paralleler Ausrichtung der Zulaufkanäle nebeneinander auf der Trägerplatte befestigt und die Druckluftnetzanschlüsse der einzelnen Ventile mittels einzelner Steckadapter miteinander verbunden. Die Steckadapter werden ineinandergesteckt und jeweils auf den Druckluftnetzanschluß am Ventilgehäuse aufgesteckt. Der erste Steckadapter trägt einen Anschlußstutzen für die Druckluftversorgungsleitung, der letzte Steckadapter ist endseitig mittels eines Stopfens verschlossen.

### Vorteile der Erfindung

Das erfindungsgemäße Wegeventil mit den kennzeichnenden Merkmalen des Anspruchs 1 hat den Vorteil, daß durch die Trennung in Ventilgehäuse und Anschlußplatte mit der entsprechenden Anordnung von Anschlußstutzen und Verbindungskanälen sowie der Ausbildung von Verbindungsmitteln an der Anschlußplatte nicht nur ein modulares Baukastensystem zur Zusammenstellung der beiden erforderlichen Ventilarten aus weitgehend gleichen Elementen geschaffen ist, sondern auch das Zusammenbinden der Ventile zu einem Ventilblock wesentlich einfacher und effizienter möglich ist. Die mit dem Ventilgehäuse verbundenen Anschlußplatten mehrerer Ventile werden einfach aneinandergesetzt, wobei der Anschlußstutzen des Druckluftnetzanschlusses des einen Ventils in die Anschlußbohrung des Druckluftanschlusses des benachbarten Ventils eingesteckt wird, und anschließend über die Verbindungselemente formschlüssig miteinander verbunden. Der Montagevorgang erfolgt werkzeuglos in kürzester Zeit. Separate Verbindungsmittel, wie die Steckadapter bei dem bekannten Wegeventil, sind überflüssig. Toleranzprobleme treten wegen der verwendeten, radial dichtenden O-Ringe zwischen Anschlußstutzen und Anschlußbohrung nicht auf. Die O-Ringe sind vormontiert und liegen geschützt in den Anschlußbohrungen des Druckluftnetzanschlusses ein. Die Demontage des Ventilblocks erfolgt mittels eines flachen Gegenstandes, mit dessen Hilfe die bevorzugt als Rasten ausgeführten Verbindungsmittel gelöst werden. Durch die extrem geringe Montage- und Demontagezeit wird eine deutliche Kostenreduzierung sowohl bei der Fertigung als auch bei Servicearbeiten erzielt.

Das mit dem erfindungsgemäßen Wegeventil aufbaubare modulare Baukastensystem umfaßt ein einheitliches Ventilgehäuse und zwei verschiedene Ausführungen von Anschlußplatten sowie ein Verschlußelement zum Verschließen der Anschlußbohrungen des Druckluftnetzanschlusses. Die beiden Anschlußplattenvarianten sind äußerlich identisch ausgestaltet, tragen also gleiche Anschlußstutzen und Anschlußbohrungen des Druckluftnetzanschlusses sowie gleiche Verbindungsmittel. Lediglich das Innere der Anschlußplatte ist soweit abgeändert, als bei der Anschlußplatte für direkt geschaltete Ventile eine reine Kanalanordnung und bei der Anschlußplatte für vorgesteuerte Ventile neben der Kanalausbildung noch eine pneumatisch betätigtes Sitzventil integriert ist. Durch die insoweit gleiche Ausbildung der Anschlußplatten lassen sich unterschiedliche Ventiltypen je nach Bedarf problemlos zu einem Ventilblock zusammensetzen.

Durch die in den weiteren Ansprüchen aufgeführten Maßnahmen sind vorteilhafte Weiterbildungen und Verbesserungen des im Anspruch 1 angegebenen elektromagnetisch betätigbaren Wegeventils möglich.

Gemäß einer bevorzugten Ausführungsform der Erfindung ist auf der Unterseite des Ventilgehäuses ein gestufter Einsteckstutzen mit zwei koaxialen Stutzenabschnitten unterschiedlichen Durchmessers und auf der Oberseite der Anschlußplatte eine Einsteckstufenbohrung mit zwei koaxialen Bohrungsabschnitten unterschiedlichen Durchmessers ausgebildet. Der Einsteckstutzen ist unter Zwischenlage eines radial abdichtenden O-Rings zwischen jedem Stutzen- und Bohrungsabschnitt in die Einsteckbohrung dichtend einsteckbar. In der kreisförmigen Stirnseite des durchmesserkleineren Stutzenabschnitts mündet der Zulaufkanal und in der ringförmigen Stirnseite des durchmessergrößeren Stutzenabschnitts mündet der Arbeitskanal. Der durchmesserkleinere Bohrungsabschnitt der Einsteckbohrung ist an einem Verbindungskanal angeschlossen, der den Anschlußstutzen und die Anschlußbohrung des Druckluftnetzanschlusses in der Anschlußplatte miteinander verbindet. Die Anschlußplatte ist für ein vom Elektromagneten direkt betätigtes Wegeventil so ausgeführt, daß der durchmessergrößere Bohrungsabschnitt der Einsteckbohrung mit dem Arbeitsanschluß in Verbindung steht, und für ein vom Elektromagneten vorgesteuertes, pneumatisch betätigtes Ventil so ausgeführt, daß der durchmessergrößere Bohrungsabschnitt der Einsteckbohrung in einem Verbindungskanal mündet, der über einen Steuerkanal mit einer von einem Vorschiebekolben begrenzten Arbeitskammer eines Sitzventils verbindbar ist. Der Vorschiebekolben betätigt über einen Ventilstößel eine Ventilplatte, die eine Ventilöffnung schließt bzw. freigibt. Die Ventilöffnung verbindet den Arbeitsanschluß an der Anschlußplatte mit dem Verbindungskanal zwischen Anschlußstutzen und Anschlußbohrung des Druckluftnetzanschlusses in der Anschlußplatte.

Gemäß einer bevorzugten Ausführungsform der Erfindung sind das Gehäuse und die Anschlußplatte miteinander verrastbar, wozu Rastlöcher und darin einclipsbare Rastnasen vorgesehen sind. Vorzugsweise sind die Rastnasen am Umfang des Ventilgehäuses radial abstehend und die Rastlöcher an der Anschlußplatte angeordnet. Durch diese Verrastung ist die Montage des Einzelventils sehr einfach, wobei infolge der radial dichtenden O-Ringe zwischen dem Einsteckstutzen des Ventilgehäuses und der Einsteckbohrung in der Anschlußplatte keine Toleranzprobleme auftreten. Die O-Ringe sind geschützt vormontiert und erfordern keine besondere Handhabung bei der Zusammensetzung des Ventils.

Gemäß einer vorteilhaften Ausführungsform der Erfindung ist zur Verschließung der Anschlußbohrung des Druckluftnetzanschlusses in der Anschlußplatte ein Verschlußelement vorgesehen, das auf einer Elementseite Verbindungselemente trägt, die mit den auf der die Anschlußbohrung tragenden Plattenseite der Anschlußplatte angeordneten Verbindungsmittel zur Herstellung einer Verbindung korrespondieren. Das Verschlußelement trägt einen axial vorstehenden Zapfen, der in die Anschlußbohrung hineinragt und diese mittels eines Dichtungsringes luftdicht abdichtet. Bei Verwendung des erfindungsgemäßen Ventils als Einzelventil ist für jedes Ventil ein solches Verschlußelement erforderlich, das die Anschlußbohrung des Druckluftnetzanschlusses abdichtet. Bei Zusammenstecken von mehreren Einzelventilen zu einem Ventilblock wird das Verschlußelement lediglich an der Anschlußplatte des letzten Ventils angebracht. Das Verschlußelement ist als einfaches Spritzgußteil einfach herzustellen und ist wiederum werkzeuglos zu montieren. Montage und Demontage erfolgen in gleicher Weise wie bei den Anschlußplatten untereinander.

Gemäß einer vorteilhaften Ausführungsform der Erfindung sind an einer Plattenseite der Anschlußplatte, die sich zwischen den beiden den Anschlußstutzen bzw. die Anschlußbohrung tragenden Plattenseiten rechtwinklig zu diesen erstreckt, Befestigungsmittel für die räumliche Festlegung der Anschlußplatte vorgesehen. Diese Befestigungsmittel umfassen bevorzugt eine an der Anschlußplatte einstückig angeformte Befestigungsplatte mit zwei daran angeordneten Befestigungsaugen. Mittels durch die Befestigungsaugen hindurchgesteckten Schrauben kann jedes Ventil einzeln am Fahrzeugrahmen oder an einer am Fahrzeugrahmen gehaltenen Trägerplatte befestigt werden. Zur Befestigung sind nur kurze Schrauben erforderlich, wodurch Montagezeit, Materialkosten und Gewicht eingespart wird.

Zur elektrischen Kontaktierung des Elektromagneten sind gemäß einer weiteren Ausführungsform der Erfindung die elektrischen Anschlüsse der Magnetspule des Elektromagneten auf einen am Ventilgehäuse von außen zugänglichen zweipoligen Stecker geführt, der zwei, jeweils mit einem Wicklungsende der Magnetspule verbundene Steckstifte aufweist. Der Stecker wird von einer Steckerhaube übergriffen, die zwei auf die Steckstifte aufsteckbare Steckhülsen trägt. Für die Verwendung bei Ventilblöcken sind mehrere Steckerhauben mit einer elektrischen Sammelschiene verbunden, die mittels eines umspritzten Stanzgitters realisiert wird. Die Sammelschiene weist mehrere Leiterbahnen auf, deren Anzahl um eins größer ist als die Zahl der Steckerhauben. Jeweils eine der beiden Steckhülsen einer Steckerhaube ist mit einer für alle Steckerhauben gemeinsamen Leiterbahn und die andere Steckhülse ist mit einer separaten Leiterbahn verbunden. Alle Leiterbahnen sind endseitig an einen separaten elektrischen Kontakt eines elektrischen Anschlußsteckers geführt. Für eine Sammelschiene zur Stromversorgung von drei Ventilen in einem Ventilblock wird bevorzugt ein Anschlußstecker nach DIN 72 585 verwendet, der über vier elektrische Kontakte verfügt, die in der beschriebenen Weise mit den vier Leiterbahnen der Sammelschiene verbunden sind. Die Steckerhauben an der Sammelschiene und die Stecker an den Ventilgehäusen der zum Ventilblock zusammengesetzten Ventile sind radial gedichtet.

### Zeichnung

Die Erfindung ist anhand von in der Zeichnung dargestellten Ausführungsbeispielen in der nachfolgenden Beschreibung näher erläutert. Es zeigen:
- Fig. 1: eine Vorderansicht eines elektromagnetisch gesteuerten pneumatischen Wegeventils,
- Fig. 2: eine Draufsicht des Ventils in Fig. 1,
- Fig. 3: eine Seitenansicht des Ventils in Fig. 1,
- Fig. 4: einen Schnitt des Ventils längs der Linie IV-IV in Fig. 3,
- Fig. 5: eine gleiche Darstellung des Ventils wie in Fig. 3, jedoch vergrößert und teilweise geschnitten,
- Fig. 6: eine Vorderansicht des Ventilgehäuses des Ventils in Fig. 1,
- Fig. 7: einen Schnitt des Ventilgehäuses gemäß Linie VII-VII in Fig. 6,
- Fig. 8: eine Vorderansicht eines elektromagnetisch vorgesteuerten pneumatischen Wegeventils,
- Fig. 9: eine Draufsicht des Ventils in Fig. 8,
- Fig.10: eine Seitenansicht des Ventils in Fig. 8,
- Fig.11: eine gleiche Darstellung wie in Fig. 10, jedoch vergrößert und teilweise geschnitten,
- Fig.12: eine Vorderansicht eines aus drei Ventilen zusammengesetzten Ventilblocks,
- Fig.13: ein Schaltbild des Ventilblocks in Fig. 12,
- Fig.14: eine Seitenansicht zweier aneinandergesetzter Ventile vor Herstellung einer festen Verbindung im Ventilblock,
- Fig.15: ausschnittweise eine vergrößerte Darstellung von Verbindungsmitteln zwischen zwei zu einem Ventilblock zusammengesetzten Ventilen,
- Fig.16: eine Seitenansicht einer Sammelschiene zur elektrischen Kontaktierung des Ventilblocks in Fig. 12, teilweise geschnitten,
- Fig.17: eine schematische Darstellung einer Draufsicht eines Stanzgitters der Sammelschiene in Fig. 16,
- Fig.18: eine Vorderansicht eines Verschlußelements,
- Fig.19: eine Ansicht des Verschlußelements gemäß Pfeil XIX in Fig. 18.

### Beschreibung der Ausführungsbeispiele

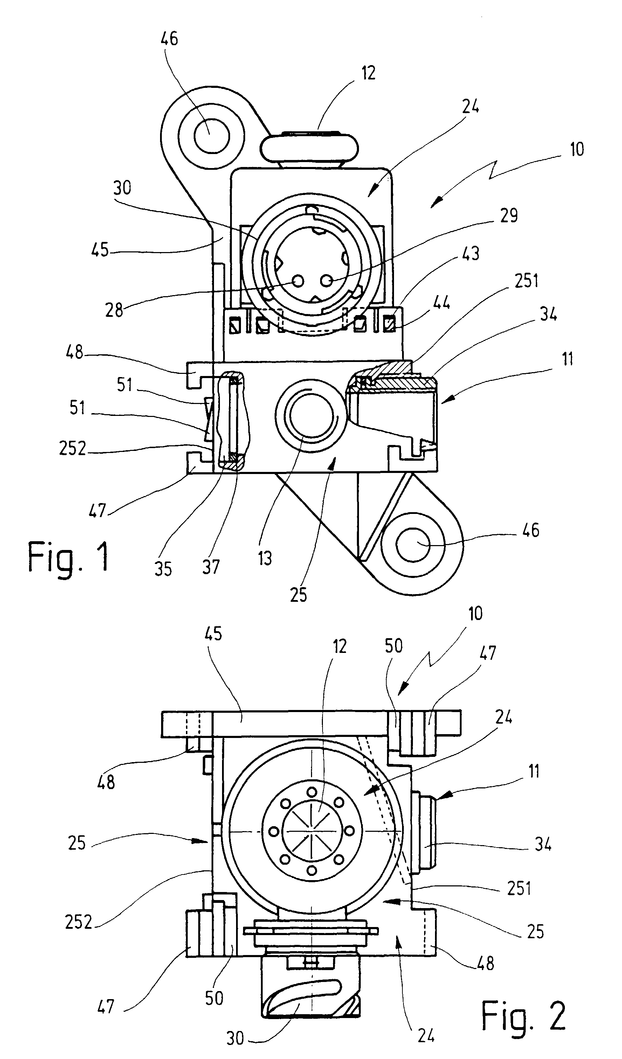

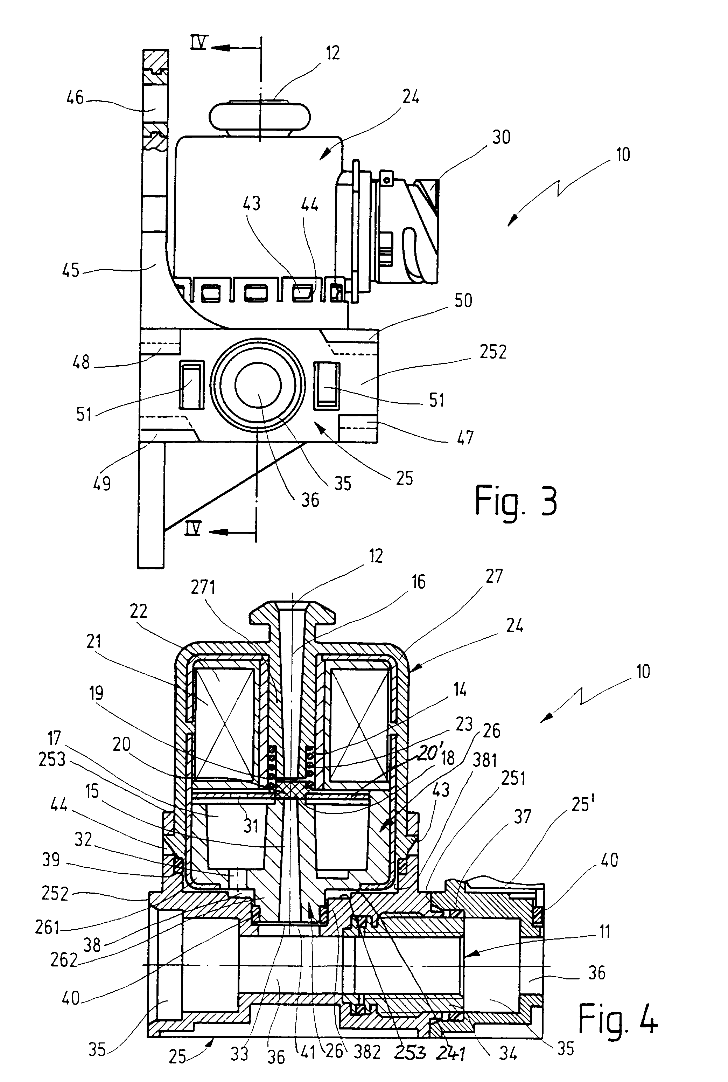

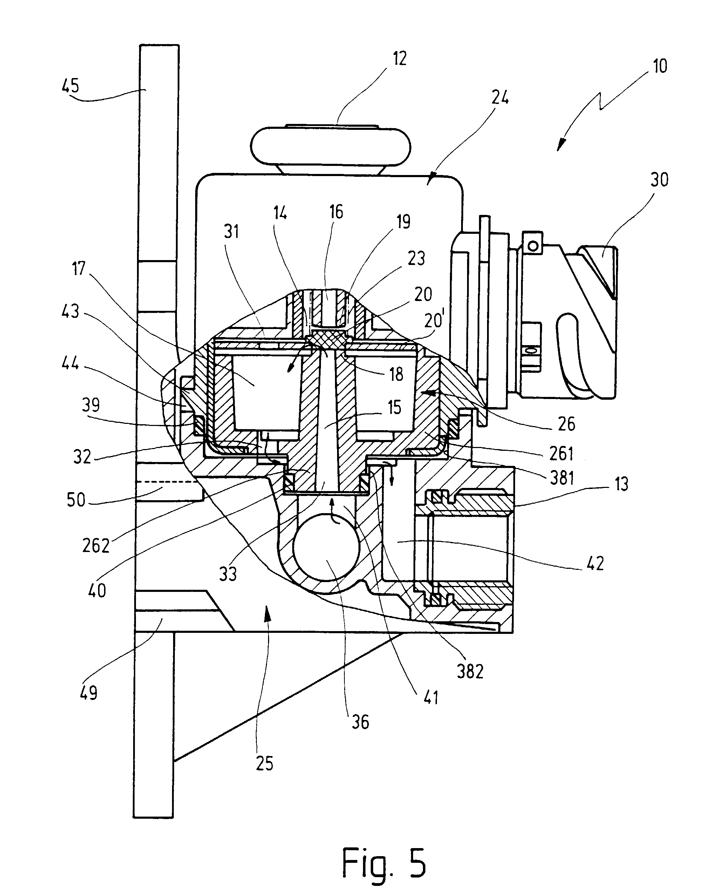

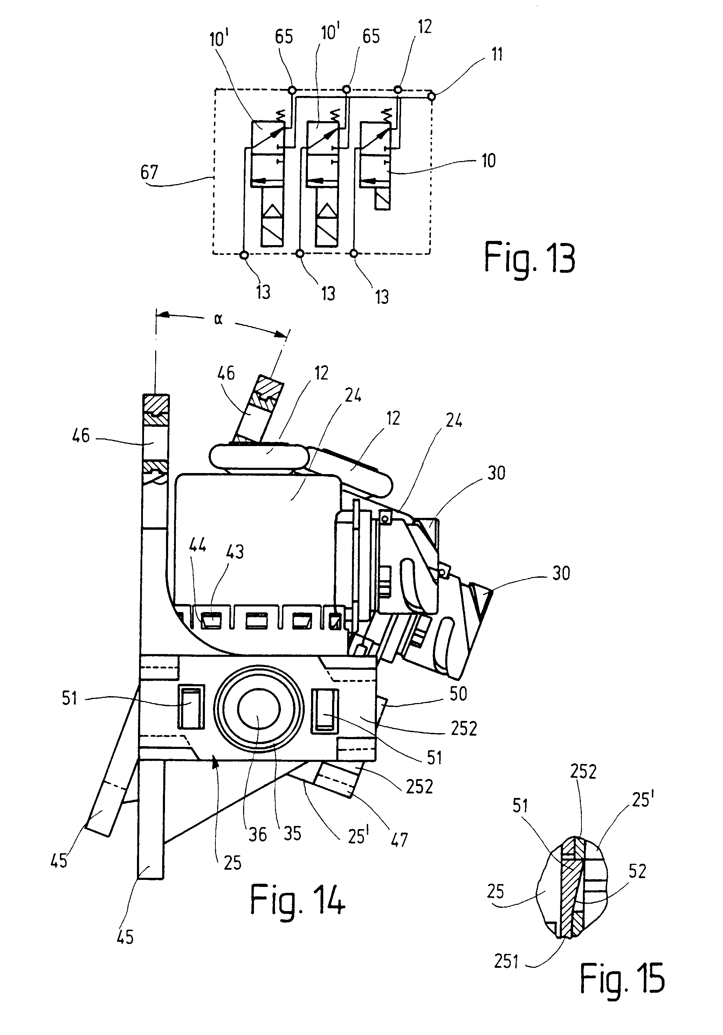

Das in Fig. 1 - 5 in verschiedenen Ansichten und Schnittdarstellungen gezeigte elektromagnetisch betätigte pneumatische Wegeventil 10 ist als 3/2-Wegemagnetventil ausgebildet, das in bekannter Weise einen Druckluftnetzanschluß 11, eine Entlüftung 12 und einen Arbeitsanschluß 13 für einen Druckluftverbraucher aufweist. Das Schaltsymbol für dieses 3/2-Wegemagnetventil ist in Fig. 13 rechts dargestellt. Wie dort verdeutlicht ist, ist der Arbeitsanschluß 13 in der unerregten Grundstellung des Ventils mit der Entlüftung 12 verbunden und gegenüber dem Druckluftnetzanschluß 11 abgesperrt und in der erregten Arbeitsstellung des Ventils mit dem Druckluftnetzanschluß 11 verbunden und von der Entlüftung 12 abgesperrt. Wie aus den Schnittdarstellungen in Fig. 4 und 5 ersichtlich ist, mündet hierzu in einem Ventilraum 14 ein zu dem Druckluftnetzanschluß 11 führender Zulaufkanal 15, ein zu der Entlüftung 12 führender Entlüftungskanal 16 und ein zu dem Arbeitsanschluß 13 führender Arbeitskanal 17.

Zulaufkanal 15 und Entlüftungskanal 16 fluchten miteinander und tragen jeweils an ihrer Kanalmündung im Ventilraum 14 einen Ventilsitz 18 bzw. 19, auf den sich wechselweise ein Ventilglied 20 aufsetzt. Das Ventilglied 20 ist an einem als scheibenförmiges Blechstanzteil ausgebildeten Anker 20' eines Elektromagneten 21 befestigt, dessen Magnetspule 22 koaxial zum Entlüftungskanal 16 angeordnet ist. Das Ventilglied 20 wird von einer Ventilfeder 23 bei unerregter Magnetspule 22 auf den Ventilsitz 18 am Zulaufkanal 15 aufgepreßt, so daß dieser abgesperrt und der Arbeitsanschluß 13 mit der Entlüftung 12 verbunden ist. Bei erregter Magnetspule 22 hebt das Ventilglied 20 vom Ventilsitz 18 ab und preßt sich auf den Ventilsitz 19 am Entlüftungskanal 16 auf. Damit ist der Entlüftungskanal 16 abgesperrt und der Arbeitsanschluß 13 mit dem Druckluftnetzanschluß 11 verbunden.

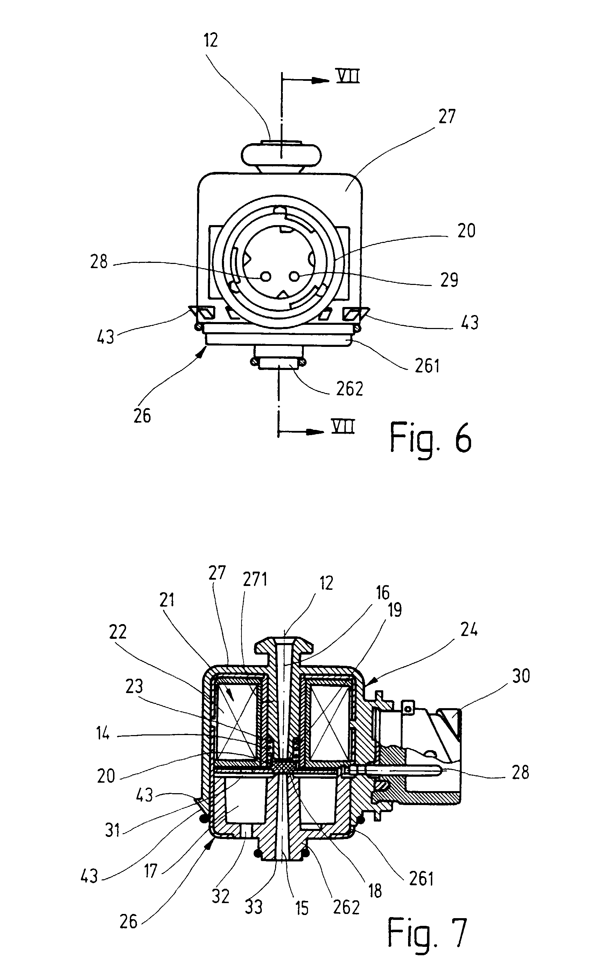

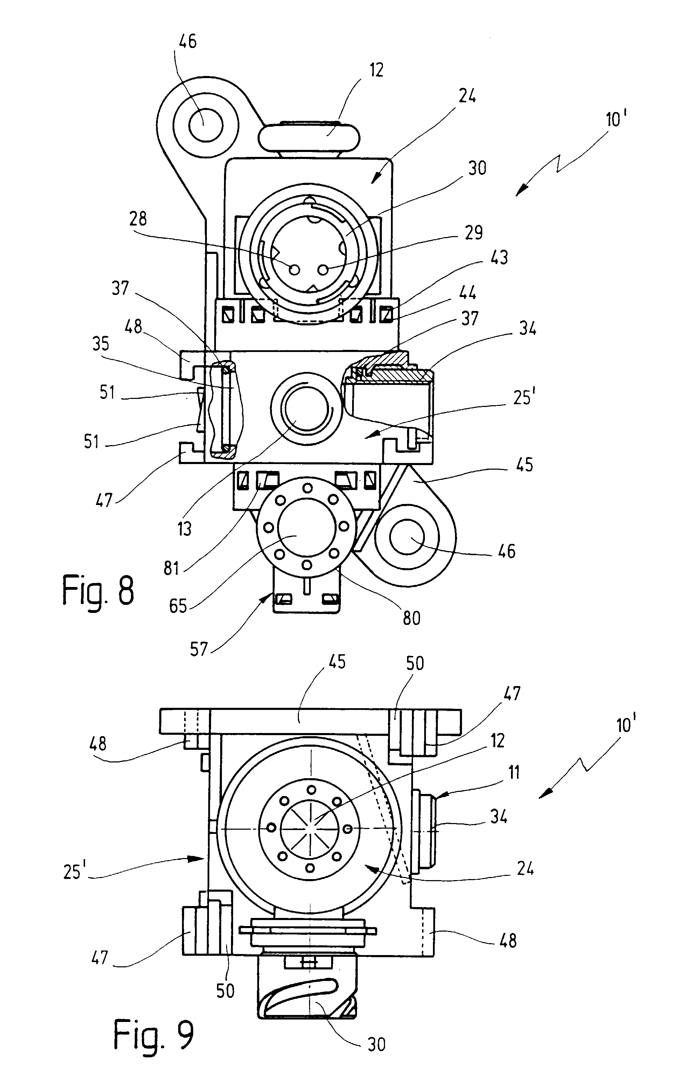

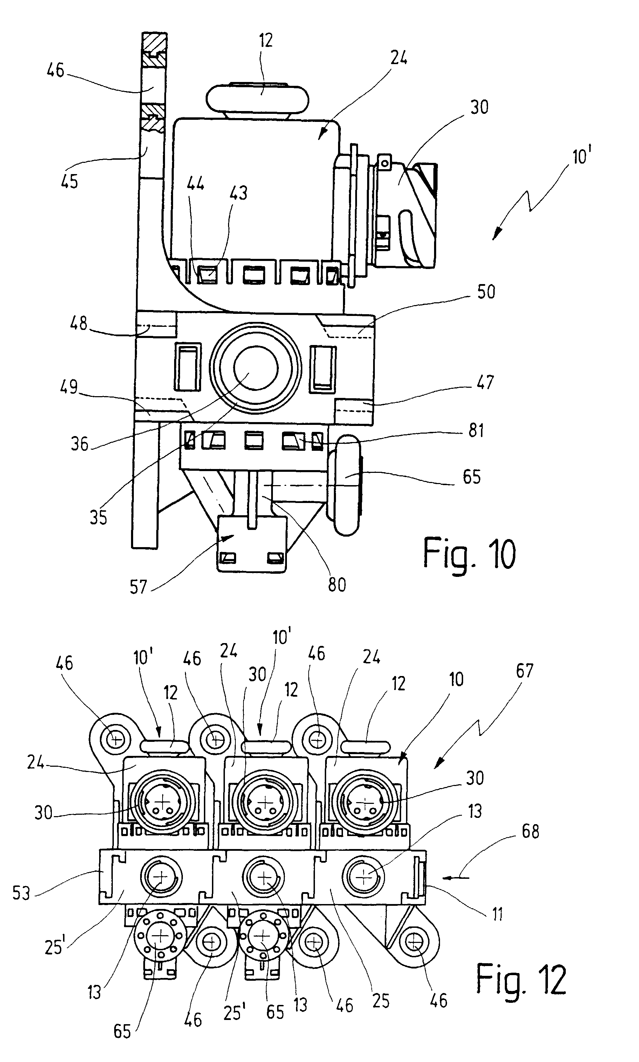

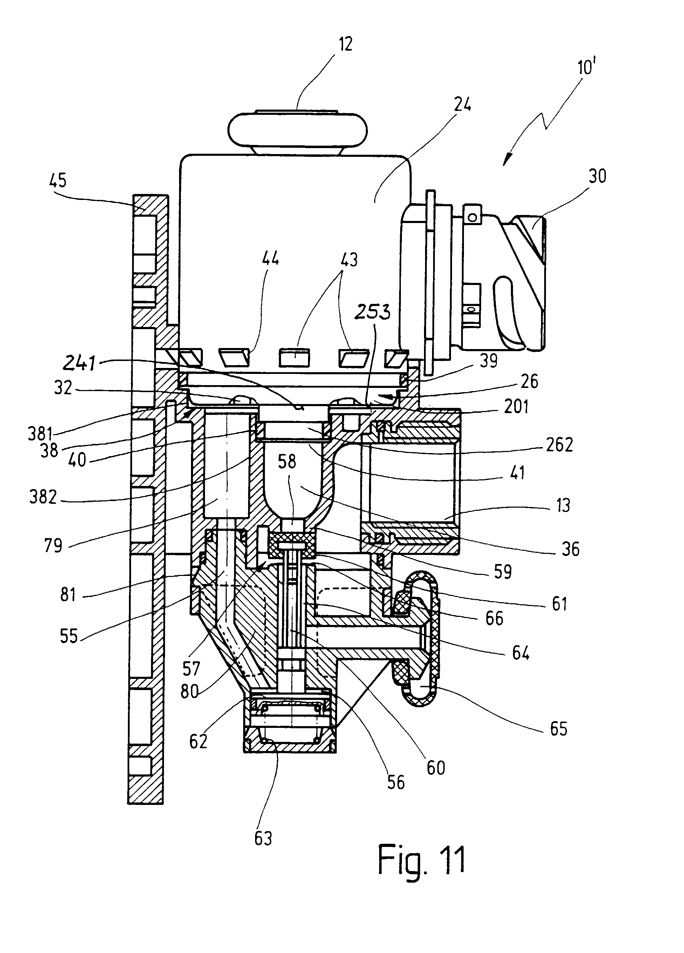

Zur Realisierung eines modularen Baukastensystems für den Aufbau des Wegeventils ist der Elektromagnet 21 mit Magnetspule 22, der Ventilraum 14 mit Ventilglied 20, der Arbeitskanal 17, der Zulauf- und Entlüftungskanal 15,16 mit den Ventilsitzen 18,19 und die Entlüftung 12 in einem Ventilgehäuse 24 zusammengefaßt, während die Anschlüsse 11,13 für das Druckluftnetz und den Druckluftverbraucher in eine von dem Ventilgehäuse 24 separierbare Anschlußplatte 25 gelegt sind, die mit dem Ventilgehäuse 24 lösbar verbunden ist. Auf diese Weise erhält man ein standardisiertes Ventilgehäuse 24, wie es in Fig. 6 und 7 dargestellt ist, das mit unterschiedlich konzipierten Anschlußplatten 25 verbindbar ist. Je nach Ausführung der Anschlußplatte 25 kann ein elektromagnetisch direkt betätigtes Wegeventil 10 gemäß Fig. 1 - 5 oder ein elektromagnetisch vorgesteuertes Wegeventil 10' gemäß Fig. 8 - 11 hergestellt werden. Das Ventilgehäuse 24 ist zweiteilig ausgeführt und besteht aus einem als gestufter Einsteckstutzen 26 ausgebildeten Gehäuseunterteil und einem Gehäuseoberteil, das als eine den Einsteckstutzen 26 teilweise übergreifende Kappe 27 ausgebildet ist. Die Kappe 27 weist einen zapfenförmigen Mittelteil 271 auf, in dem koaxial der Entlüftungskanal 16 verläuft und auf den die Magnetspule 22 aufgesetzt ist. Die Spulenenden der Magnetspule 22 sind durch die Kappe 27 hindurchgeführt und mit den beiden Steckerstiften 28,29 eines zweipoligen Steckers 30 elektrisch verbunden. Der Stecker 30 ist seitlich an der Kappe 27 gehalten. Der Einsteckstutzen 26 weist zwei Stutzenabschnitte 261 und 262 mit unterschiedlichen Durchmessern auf. In dem Einsteckstutzen 26 ist der Zulaufkanal 15 als Koaxialbohrung und der Arbeitskanal 17 als dazu koaxiale Ringkammer ausgebildet, die über eine Einlaßöffnung 31 im Anker 20' mit dem Ventilraum 14 verbunden ist und mit einer Auslaßöffnung 32 in der ringförmigen Stirnseite des durchmessergrößeren Stutzenabschnitts 261 mündet. In der kreisförmigen Stirnseite des durchmesserkleineren Stutzenabschnitts 262 liegt die Mündung 33 des Zulaufkanals 15.

In der mit dem Ventilgehäuse 24 lösbar verbundenen Anschlußplatte 25 ist der Druckluftnetzanschluß 11 in der Schnittdarstellung gemäß Fig. 4 und der Arbeitsanschluß 13 in der Schnittdarstellung gemäß Fig. 5 zu sehen. Der Druckluftnetzanschluß 11 umfaßt einen auf der einen Plattenseite 251 der Anschlußplatte 25 zugänglichen Anschlußstutzen 34 und eine auf der gegenüberliegenden Plattenseite 252 der Anschlußplatte 25 eingebrachte Anschlußbohrung 35, die mit dem Anschlußstutzen 34 über einen koaxialen Verbindungskanal 36 in Verbindung steht (Fig. 4). Der Anschlußstutzen 34 wird von einer Schraubhülse mit Innengewinde realisiert, die in die aus Kunststoff bestehende Anschlußplatte 25 druckdicht eingeformt ist und an abweichende Gewindegrößen, -formen und Dichtsysteme angepaßt werden kann. Anschlußstutzen 34 und Anschlußbohrung 35 sind so aufeinander abgestimmt, daß der Anschlußstutzen 34 unter Zwischenlage eines radial dichtenden O-Rings 37 luftdicht in die Anschlußbohrung 35 eingesteckt werden kann. Um dies zu illustrieren, ist in Fig. 4 ausschnittweise die Anschlußplatte 25' eines benachbarten Wegeventils mit Anschlußbohrung 35 ausschnittweise dargestellt. In der Schnittdarstellung ist zu erkennen, wie der Anschlußstutzen 34 der Anschlußplatte 25 in die Anschlußbohrung 35 der benachbarten Anschlußplatte 25' eingesteckt und die Steckverbindung durch den O-Ring 37 abgedichtet ist.

In der Oberseite 253 der Einsteckplatte 25 ist eine Einsteckstufenbohrung 38 mit zwei koaxialen Bohrungsabschnitten 381 und 382 mit unterschiedlichen Bohrungsdurchmessern eingebracht. Die Bohrungsabschnitte 381 und 382 sind den Stutzenabschnitten 261 und 262 des Einsteckstutzens 26 am Ventilgehäuse 24 zu deren Aufnahme angepaßt, so daß beim Einstecken des Einsteckstutzens 26 in die Einsteckstufenbohrung 38 die Stutzenabschnitte 261 und 262 unter Zwischenlage jeweils eines radial abdichtenden O-Rings 39 bzw. 40 in dem zugeordneten Bohrungsabschnitt 381 bzw. 382 dichtend einliegen. Der durchmesserkleinere Bohrungsabschnitt 382 ist über eine koaxiale Öffnung 41 mit dem Verbindungskanal 36 zwischen Anschlußstutzen 34 und Anschlußbohrung 35 verbunden und steht damit mit dem Druckluftnetzanschluß 11 in Verbindung, so daß der Zulaufkanal 15 - wie bereits erwähnt - an dem Druckluftnetzanschluß 11 liegt. Der durchmessergrößere Bohrungsabschnitt 381 steht - wie das aus Fig. 5 zu erkennen ist - über einen Verbindungskanal 42 mit dem Arbeitsanschluß 13 in Verbindung, so daß der Arbeitskanal 17 - wie bereits erwähnt - zu dem Arbeitsanschluß 13 führt. Der Arbeitsanschluß 13 ist wiederum durch eine Schraubhülse mit Innengewinde realisiert, die in die Anschlußplatte 25 eingeformt ist. In das Innengewinde der Schraubhülse wird eine zu einem Druckluftverbraucher führende Druckleitung eingeschraubt.

Zur Verbindung von Ventilgehäuse 24 und Anschlußplatte 25 trägt das Ventilgehäuse 24 auf seinem Umfang radial vorspringender Rastnasen 43 (vgl. Fig. 1 und 3 - 7), die in korrespondierende Rastlöcher 44 in der Anschlußplatte25 einschnappen. Durch die zwischen Einsteckstutzen 26 des Ventilgehäuses 24 und der Einsteckstufenbohrung 38 eingelegten O-Ringe 39,40 ergeben sich beim Zusammensetzen von Ventilgehäuse 24 und Anschlußplatte 25 keine Toleranzprobleme. Das Zusammenstecken beider Teile ist in kürzester Zeit bewerkstelligt. Die Demontage erfolgt durch Ausheben der Rastnasen 43 aus den Rastlöchern 44 mittels eines geeigneten Werkzeugs.

Zur fahrzeugseitigen Befestigung des Wegeventils 10 ist an der Anschlußplatte 25 eine Befestigungsplatte 45 einstückig angeformt, die sich rechtwinklig zu der Ober- und Unterseite der Anschlußplatte 25 sowie zu den beiden Plattenseiten 251,252 der Anschlußplatte 25 erstreckt, die den Anschlußstutzen 34 bzw. die Anschlußbohrung 35 enthalten. In der Befestigungsplatte 45 sind zwei diagonal angeordnete Befestigungsaugen 46,47 aus eingespritzten Metallbuchsen ausgebildet, durch welche Befestigungsschrauben hindurchgeführt werden können, die am Fahrzeugrahmen oder an einer geeigneten Trägerplatte am Fahrzeugrahmen verschraubt werden.

Wie aus Fig. 1 - 3 zu erkennen ist, sind auf den Plattenseiten 251 und 252, welche den Anschlußstutzen 34 bzw. die Anschlußbohrung 35 des Druckluftnetzanschlusses 11 tragen, Verbindungsmittel angeordnet, die so ausgebildet sind, daß sie zur Herstellung einer mechanischen Verbindung zwischen zwei mit Anschlußstutzen 34 und Anschlußbohrung 35 ineinandergesteckten Anschlußplatten 25,25' (Fig. 4) miteinander korrespondieren. Im einzelnen umfassen diese Verbindungsmittel auf jeder Plattenseite 251 bzw. 252 zwei vorstehende Krallen 47,48 und zwei eingearbeitete Taschen 49,50, die auf jeder Plattenseite 251 und 252 zueinander diagonal angeordnet sind. In Fig. 3 sind die beiden diagonal angeordneten Krallen 47,48 und die beiden diagonal angeordneten Taschen 49,50 auf der Plattenseite 252 zu sehen. Auf der Plattenseite 251 sind die gleichen Krallen 47,48 und Taschen 49,50 angeordnet, so daß bei Aneinanderlegen der Plattenseite 251 der einen Anschlußplatte 25 an die Plattenseite 252 der anderen Anschlußplatte 25' die entsprechenden Krallen 47,48 an der Plattenseite 251 der Anschlußplatte 25 in die Taschen 49,50 an der Plattenseite 252 der anderen Anschlußplatte 25' und umgekehrt die Krallen 47,48 an der Plattenseite 252 der anderen Anschlußplatte 25' in die Taschen 49,50 in der Plattenseite 251 der Anschlußplatte 25' eingreifen und so die beiden Anschlußplatten 25,25' miteinander verriegeln. Wie in Fig. 14 illustriert ist, sind die Krallen 47,48 und die Taschen 49,50 so ausgebildet, daß zum wechselseitigen Einschieben der Krallen 47,48 an der einen Anschlußplatte 25 in die Taschen 49,50 an der anderen Anschlußplatte 25' und umgekehrt die beiden Anschlußplatten 25,25' um einen Winkel a gegeneinander verdreht aneinandergesetzt werden müssen, wobei der Anschlußstutzen 34 der einen Anschlußplatte 25 in die Anschlußbohrung 35 der anderen Anschlußplatte 25' (Fig. 4) eintaucht. Danach werden die beiden Anschlußplatten 25,25' um die miteinander fluchtenden Längsachsen von Anschlußstutzen 34 und Anschlußbohrung 35 soweit zurückgedreht, bis der Winkel a zu Null geworden ist. Durch diese Drehung schieben sich die Krallen 47,48 in die zugeordneten Taschen 49,50 ein und verriegeln die beiden Anschlußplatten 25,25' in Axialrichtung gegeneinander.

Um ein unbeabsichtigtes Lösen der beiden Anschlußplatten 25,25' voneinander durch erneutes Drehen der Anschlußplatten 25,25' um den Winkel a zueinander zu verhindern, weisen die Verbindungsmittel noch Rastnasen 51 und Rastfenster 52 auf. Zwei Rastnasen 51 sind an der Plattenseite 252 auf gegenüberliegenden Seiten der Anschlußbohrung 35 des Druckluftnetzanschlusses 11 angeordnet, wobei sie gegeneinander um 180° gedreht ausgeführt sind. Die beiden Rastfenster 52 sind auf der Plattenseite 251 beidseitig des Anschlußstutzens 34 des Druckluftnetzanschlusses 11 so angeordnet, daß sie mit den Rastnasen 51 korrespondieren. Beim Verdrehen der beiden gemäß Fig. 14 aneinandergesetzten Anschlußplatten 25 und 25' in Richtung Verkleinerung des Drehwinkels a rasten am Ende der Verdrehung (a = 0) die Rastnasen 51 auf der Plattenseite 252 der Anschlußplatte 25 in die Rastfenster 52 auf der Plattenseite 251 die Anschlußplatte 25' ein, wie dies in Fig. 15 illustiert ist. Damit sind die beiden Anschlußplatten 25 und 25' gegen Rückdrehen gesichert und die Verbindung zwischen den beiden Anschlußplatten 25,25' kann nicht unabsichtlich gelöst werden. Ein Aufheben der Rastverbindung und damit ein Verdrehen der beiden Anschlußplatten 25,25' gegeneinander ist nur nach Ausdrücken der Rastnasen 51 aus den Rastfenstern 52 möglich, was mittels eines flachen Gegenstandes bewirkt werden kann.

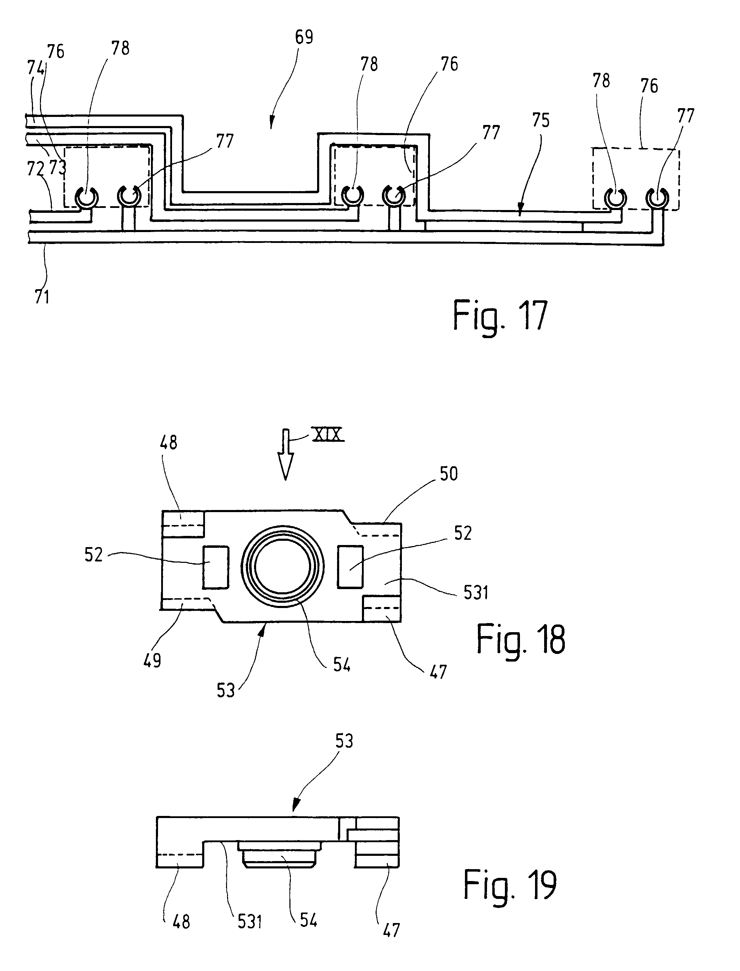

Zum modularen Baukastensystem des beschriebenen Wegeventils gehört noch ein Verschlußelement 53, wie es in Fig. 18 und 19 dargestellt ist. Dieses Verschlußelement 53 dient zum Verschließen der Anschlußbohrung 35 des Druckluftnetzanschlusses 11 und trägt hierzu einen mit der Anschlußbohrung 35 korrespondierenden Zapfen 54, der unter Zwischenschaltung eines radial dichtenden O-Rings in die Anschlußbohrung 35 luftdicht eintaucht. Auf der den Zapfen 54 tragenden Seite 531 des Verschlußelements 53 sind die gleichen Verbindungsmittel angeordnet, wie auf der Plattenseite 251 der Anschlußplatte 25, an welcher der Anschlußstutzen 34 vorsteht. Diese Verbindungsmittel umfassen wiederum die beiden diagonal angeordneten Krallen 47,48 und die beiden diagonal angeordneten Taschen 49,50 sowie zwei Rastfenster 52. Wie in Fig. 14 für das Aneinandersetzen zweier Anschlußplatten 25,25' illustriert ist, muß auch das Verschlußelement 53 unter dem gleichen Drehwinkel a an die Plattenseite 252 der Anschlußplatte 25 angesetzt werden. Durch anschließendes Rückdrehen des Anschlußelements 53 in Richtung Verkleinerung des Verdrehwinkels α bis α = 0 schwenken die Krallen 47,48 des Verschlußelements 53 in die Taschen 49,50 an der Anschlußplatte 25 und umgekehrt die Krallen 47,48 in die Taschen 49,50 am Verschlußelement 53 ein. Am Ende der Drehbewegung rasten die an der Plattenseite 252 der Anschlußplatte 25 ausgebildeten Rastnasen 51 in die beiden Rastfenster 52 im Verschlußelement 53 ein. Wird nunmehr noch an den Anschlußstutzen 34 die vom Druckluftnetz kommende Druckversorgungsleitung und an den Arbeitsanschluß 13 die zum Druckluftverbraucher führende Druckleitung angeschlossen und der Elektromagnet 21 über den zweipoligen Stecker 30 elektrisch kontaktiert, so ist das 3/2-Wegemagnetventil 10, wie es in Fig. 1 - 5 dargestellt ist, voll funktionsfähig.

In Fig. 8 - 11 ist ein pneumatisches 3/2-Wegemagnetventil 10' mit elektromagnetischer Vorsteuerung dargestellt. Das Schaltungssymbol dieses vorgesteuerten Ventils 10' ist in Fig. 13 dargestellt. Zur Realisierung dieses vorgesteuerten Ventils mit dem modularen Baukastensystem ist eine weitere Anschlußplatte 25' vorgesehen, die äußerlich weitgehend identisch der Anschlußplatte 25 ist und lediglich im Innern zur Unterbringung eines pneumatisch gesteuerten Hauptventils modifiziert ist. Durch wahlweises Verbinden des Gehäuses 24 mit der Anschlußplatte 25 wird ein elektromagnetisch direkt betätigtes 3/2-Wegeventil 10 und durch Verbinden des Gehäuses 24 mit der Anschlußplatte 25' wird ein elektromagnetisch vorgesteuertes pneumatisch betätigtes 3/2-Wegeventil 10' realisiert. Die Anschlußplatte 25' weist wie die Anschlußplatte 25 in Fig. 1 - 5 in unveränderter Weise den Druckluftnetzanschluß 11 mit Anschlußstutzen 34 und Anschlußbohrung 35, die durch den Verbindungskanal 36 miteinander verbunden sind, den Arbeitsanschluß 13 sowie die aus Krallen 47,48, Taschen 49,50 und Rastnasen 51 und Rastfenster 52 bestehenden Verbindungsmittel auf. Identisch ist auch die Einsteckstufenbohrung 38 ausgeführt, die mit ihren beiden Bohrungsabschnitten 381 und 382 die beiden Stutzenabschnitte 261 und 262 des Einsteckstutzens 26 am Ventilgehäuse 24 luftdicht aufnimmt, wobei wiederum der durchmesserkleinere Bohrungsabschnitt 382 an dem Verbindungskanal 36 zwischen Anschlußstutzen 34 und Anschlußbohrung 35 des Druckluftnetzanschlusses 11 angeschlossen ist. In Abänderung zur Anschlußplatte 25 ist der durchmessergrößere Bohrungsabschnitt 381 nicht unmittelbar mit dem Arbeitsanschluß 13 sondern mit einem Verbindungskanal 79 verbunden, der über einen Steuerkanal 55 an einer Arbeitskammer 56 eines pneumatisch betätigten Sitzventils 57 angeschlossen ist. Das Sitzventil 57 weist eine Ventilöffnung 58 auf, die eine Verbindung zwischen dem Verbindungskanal 36 und dem Arbeitsanschluß 13 herstellt. Die Ventilöffnung 58 ist von einem Ventilsitz 59 umgeben, auf dem eine an einem Ventilstößel 60 befestigte Ventilplatte 61 aufsitzt. An dem von der Ventilplatte 61 abgekehrten Ende ist der Ventilstößel 60 mit einem Verschiebekolben 62 verbunden, der die Arbeitskammer 56 einseitig begrenzt. Wird in der Arbeitskammer 56 ein Luftdruck aufgebaut, so verschiebt sich der Verschiebekolben 62 gegen die Rückstellkraft einer Ventilschließfeder 63, die Ventilplatte 61 hebt vom Ventilsitz 59 ab, und der Verbindungskanal 36 ist mit dem Arbeitsanschluß 13 verbunden, so daß dieser am Druckluftnetz liegt. Bei geschlossenem Sitzventil 57 ist der Arbeitsanschluß 13 über einen Entlüftungskanal 64 an einer separaten Entlüftung 65 angeschlossen. Der Entlüftungskanal 64 ist gleichzeitig der Führungskanal für den Ventilstößel 60. An seinem freien, der Ventilplatte 61 gegenüberliegenden Stirnseite ist der Entlüftungskanal 64 mit einem Ventilsitz 66 versehen, auf den sich die Ventilplatte 61 beim Öffnen des Sitzventils 57 aufsetzt und die Entlüftung 65 vom Arbeitsanschluß 13 absperrt. Die Entlüftung 12 im Ventilgehäuse 24 dient zum Entlüften der Arbeitskammer 56 des Sitzventils 57. Das Sitzventil 57 mit Arbeitskammer 56, Verschiebekolben 62, Ventilschließfeder 63, Ventilstößel 60 und Ventilplatte 61 sowie Steuerkanal 55, Entlüftungskanal 64 mit Ventilsitz 66 sind in einem Ventilkörper 80 integriert, der an der Unterseite der Anschlußplatte 25' angesetzt und mit dieser durch eine aus Rastnasen und Rastlöcher bestehende Rastverbindung 81 verbunden ist. Der die Ventilöffnung 58 zwischen Verbindungskanal 36 und Arbeitsanschluß 13 umgebende Ventilsitz 59 des Sitzventils 57 ist in der Anschlußplatte 25' ausgebildet.

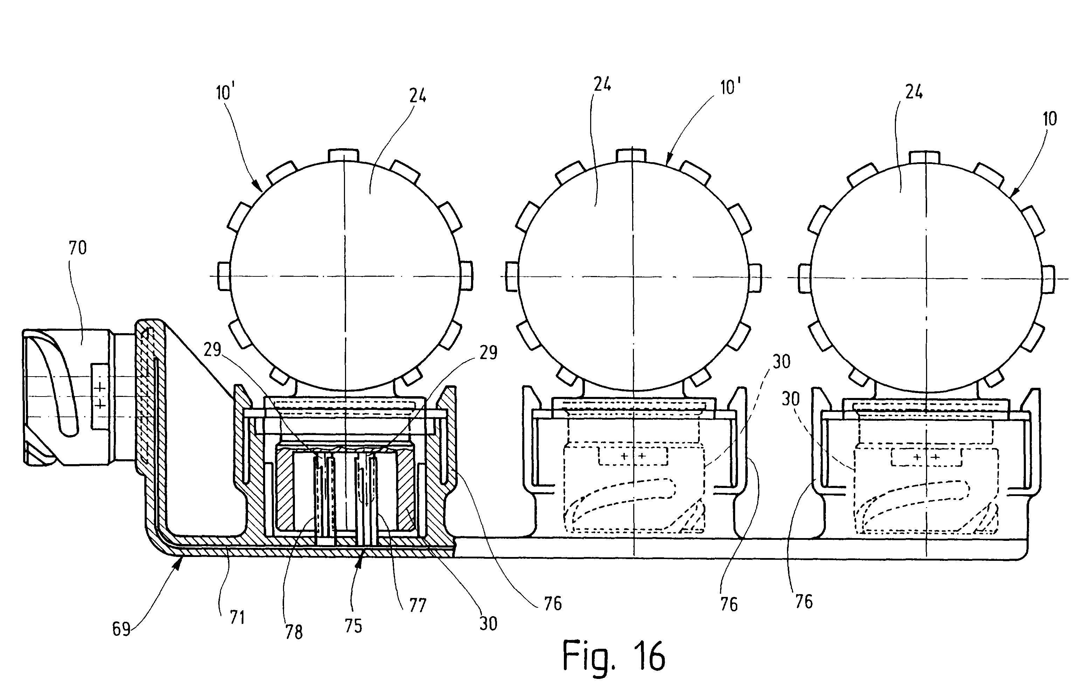

In Fig. 12 ist beispielhaft dargestellt, wie drei der beschriebenen Ventile zu einem Ventilblock 67 zusammengesetzt werden können. Zwei dieser Ventile sind vorgesteuerte 3/2-Wegemagnetventile 10' und ein Ventil ist ein direkt gesteuertes 3/2-Wegemagnetventil 10. Die beiden Ventile 10' entsprechen im Ventilaufbau den Fig. 8 - 11 und das Ventil 10 entspricht im Ventilaufbau den Fig. Fig. 1 - 5. Das Schaltbild des Ventilblocks 67 ist in Fig. 13 dargestellt. Die einzelnen Anschlußplatten 25,25' und 25' der drei Ventile 10,10' und 10' sind in der vorstehend beschriebenen und in Fig. 14 illustrierten Weise aneinandergesetzt. Die Anschlußbohrung 35 des Druckluftnetzanschlusses 11 in der Anschlußplatte 25' des letzten Ventils 10' (links in Fig. 12) ist durch das Verschlußelement 53 gemäß Fig. 18 und 19 verschlossen. In den Anschlußstutzen 34 des Druckluftnetzanschlusses 11 in der Anschlußplatte 25 des ersten Ventils 10 wird die Druckversorgungsleitung des Druckluftnetzes eingeschraubt. Die Strömungsrichtung der Druckluft ist in Fig. 12 mit Pfeil 68 gekennzeichnet. Der Ventilblock 67 kann über die sechs Befestigungsaugen 46 an den einzelnen Anschlußplatten 25,25' und 25' am Fahrzeug befestigt werden. Zur Kontaktierung der drei Stecker 30 des Ventilblocks 67 ist eine Sammelschiene 69 mit drei Steckerhauben 76 und einem Anschlußstecker 70, die in Fig. 16 in Seitenansicht, teilweise geschnitten, dargestellt ist. Der Anschlußstecker 70 nach DIN 72 585 verfügt über vier elektrische Kontakte, die jeweils mit einer Leiterbahn 71 - 74 (Fig. 17) der Sammelschiene 69 verbunden sind. Die Leiterbahnen 71 -74 sind durch ein Stanzgitter 75 realisiert, das mit Kunststoff umspritzt ist. In jeder Steckerhaube 76 sind zwei Steckhülsen 77,78 so angeordnet, daß diese sich beim Aufsetzen der Steckerhaube 76 auf einen Stecker 30 am Gehäuse 24 auf die beiden Steckerstifte 28,29 des Steckers 30 aufschieben. Alle Steckerhülsen 77 sind mit der Leiterbahn 71 einstückig verbunden, während die Steckerhülsen 78 der ersten, zweiten und dritten Steckerhaube 76 mit der Leiterbahn 72, der Leiterbahn 73 und der Leiterbahn 74 einstückig verbunden sind (Fig. 17). Durch Aufstecken der Sammelschiene 69 mit ihren Steckerhauben 76 auf die Stecker 30 am Ventilblock 67 werden sämtliche Elektromagnete der drei Ventile elektrisch richtig angeschlossen.

## Patentansprüche

1. Elektromagnetisch betätigbares pneumatisches Wegeventil (10;10') mit einem Druckluftnetzanschluß (11), mit einer Entlüftung (12) und mit mindestens einem Arbeitsanschluß (13) für einen Druckluftverbraucher, sowie mit einem von einem Elektromagneten (21) betätigten Ventilglied (20), das zur wechselweisen Absperrung eines zum Arbeitsanschluß (13) führenden Arbeitskanals (17) gegenüber dem Druckluftnetzanschluß (11) und der Entlüftung (12) sich wechselweise auf einen von zwei Ventilsitzen (18,19) aufsetzt, von denen der eine an der Kanalmündung eines zum Druckluftnetzanschluß (11) führenden Zulaufkanals (15) und der andere an der Kanalmündung eines zur Entlüftung (12) führenden Entlüftungskanals (16) ausgebildet ist, dadurch gekennzeichnet, daß der Elektromagnet (21), das Ventilglied (20), der Arbeitskanal (17), der Zulauf- und Entlüftungskanal (15,16) mit ihren Ventilsitzen (18,19) und die Entlüftung (12) in einem Ventilgehäuse (24) zusammengefaßt und die Anschlüsse (11,13) für das Druckluftnetz und den Druckluftverbraucher in eine vom Ventilgehäuse (24) separierbare Anschlußplatte (25;25') gelegt sind, die mit dem Ventilgehäuse (24) lösbar verbunden ist, daß der Druckluftnetzanschluß (11) einen auf der einen Plattenseite (251) der Anschlußplatte (25;25') zugänglichen Anschlußstutzen (34) und eine damit in Verbindung stehende, auf der davon abgewandten Plattenseite (252) der Anschlußplatte (25;25') eingebrachte Anschlußbohrung (35) aufweist, die einander so angepaßt sind, daß der Anschlußstutzen (34) unter Zwischenlage eines radial dichtenden O-Rings (37) luftdicht in die Anschlußbohrung (35) eines zweiten Wegeventils (10;10') einsteckbar ist, und daß auf jeder der den Anschlußstutzen (34) bzw. die Anschlußbohrung (35) tragenden Plattenseiten (251,252) der Anschlußplatte (25;25') Verbindungsmittel angeordnet sind, die so ausgebildet sind, daß sie zur Herstellung einer Verbindung zwischen zwei mit Anschlußstutzen (34) und Anschlußbohrung (35) ineinandergesteckten Anschlußplatten (25,25') der beiden Wegeventile (10,10') miteinander korrespondieren.

2. Ventil nach Anspruch 1, dadurch gekennzeichnet, daß auf der Unterseite (241) des Ventilgehäuses (24) ein gestufter Einsteckstutzen (26) mit zwei koaxialen Stutzenabschnitten (261,262) unterschiedlichen Durchmessers und auf der Oberseite (253) der Anschlußplatte (25;25') eine Einsteckstufenbohrung (38) mit zwei koaxialen Bohrungsabschnitten (381,382) unterschiedlichen Durchmessers ausgebildet ist, daß der Einsteckstutzen (26) unter Zwischenlage eines radial abdichtenden O-Rings (39,40) zwischen jedem Stutzenabschnitt (261,262) und zugeordneten Bohrungsabschnitt (381,382) in die Einsteckbohrung (38) dichtend einsteckbar ist, daß in der kreisförmigen Stirnseite des durchmesserkleineren Stutzenabschnitts (262) der Zulaufkanal (15) und in der ringförmigen Stirnseite des durchmessergrößeren Stutzenabschnitts (262) der Arbeitskanal (17) mündet und daß der durchmesserkleinere Bohrungsabschnitt (382) der Einsteckbohrung (38) mit einem Anschlußstutzen (34) und Anschlußbohrung (35) des Druckluftnetzanschlusses (11) miteinander verbindenden Verbindungskanal (36) in Verbindung steht.

3. Ventil nach Anspruch 2, dadurch gekennzeichnet, daß der durchmessergrößere Bohrungsabschnitt (381) der Einsteckbohrung (38) mit dem Arbeitsanschluß (13) in Verbindung steht.

4. Ventil nach Anspruch 2, dadurch gekennzeichnet, daß im Verbindungskanal (36) zwischen Anschlußstutzen (34) und Anschlußbohrung (35) des Druckluftnetzanschlusses (11) eine von einer Ventilplatte (61) eines Sitzventils (57) abgedichtete Ventilöffnung (58) vorgesehen ist, die mit dem Arbeitsanschluß (13) in Verbindung steht, daß die Ventilplatte (61) über einen Ventilstößel (60) befestigt ist, der an einem eine Arbeitskammer (56) begrenzenden Verschiebekolben (62) befestigt ist und daß der durchmessergrößere Bohrungsabschnitt (381) der Einsteckbohrung (38) mit der Arbeitskammer (56) in Verbindung steht.

5. Ventil nach Anspruch 4, dadurch gekennzeichnet, daß das Sitzventil (57) in einem mit der Anschlußplatte (25') verbundenen Ventilkörper (80) integriert ist, in dem eine Entlüftung (65) und ein die Entlüftung (65) mit dem Arbeitsanschluß (13) verbundener Entlüftungskanal (64) ausgebildet ist, der mit Abstand vor der Ventilöffnung (58) frei mündet, und daß an der Kanalmündung ein Ventilsitz (66) ausgebildet ist, auf dem sich die Ventilplatte (61) mit Freigabe der Ventilöffnung (58) aufsetzt.

6. Ventil nach Anspruch 1, dadurch gekennzeichnet, daß die Anschlußbohrung (35) des Druckluftnetzanschlusses (11) in der Anschlußplatte (25;25') mittels eines Verschlußelements (53) verschließbar ist, das auf einer Elementseite (531) Verbindungsmittel trägt, die mit den auf der die Anschlußbohrung (35) enthaltenden Plattenseite (252) der Anschlußplatte (25;25') angeordneten Verbindungsmittel zur Herstellung einer Verbindung korrespondieren, und daß das Verschlußelement (53) einen Zapfen (54) trägt, der bei an der Anschlußplatte (24) angesetzten Verschlußelement (53) in die Anschlußbohrung (35) hineinragt und diese mittels eines Dichtungsrings (37) luftdicht abdichtet.

7. Ventil nach Anspruch 1, dadurch gekennzeichnet, daß das Gehäuse (24) und die Anschlußplatte (25;25') miteinander verrastbar sind und hierzu Rastlöcher (44) und darin einclipsbare Rastnasen (43) vorgesehen sind, wobei vorzugsweise die Rastnasen (43) am Umfang des Ventilgehäuses (24) und die Rastlöcher (44) an der Anschlußplatte (25;25') angeordnet sind.

8. Ventil nach Anspruch 1, dadurch gekennzeichnet, daß an einer zwischen den beiden Anschlußstutzen (34) bzw. Anschlußbohrung (35) tragenden Plattenseiten (251,252) sich rechtwinklig dazu erstreckenden Plattenseite der Anschlußplatte (25;25') Befestigungsmittel für die räumliche Festlegung der Anschlußplatte (25;25') vorgesehen sind.

9. Ventil nach Anspruch 8, dadurch gekennzeichnet, daß die Befestigungsmittel eine an der Anschlußplatte (25;25'), vorzugsweise einstückig, angeformte Befestigungsplatte (45) mit zwei daran vorzugsweise diagonal angeordneten Befestigungsaugen (46) umfassen.

10. Ventil nach Anspruch 1, dadurch gekennzeichnet, daß die auf voneinander abgewandten Plattenseiten (251,252) der Anschlußplatte (25;25') vorgesehenen Verbindungsmittel zwei vorstehende Krallen (47,48) und zwei eingearbeitete Taschen (49,50) umfassen, wobei die Taschen (49,50) zur Aufnahme der Krallen (47,48) ausgebildet sind, daß bei beiden Krallen (47,48) und die beiden Taschen (49,50) auf jeder Plattenseite (251,252) jeweils zueinander diagonal und auf beiden Plattenseiten (251,252) so angeordnet sind, daß nach Einstecken des Anschlußstutzens (34) des einen Wegeventils (10) in die Anschlußbohrung (35) eines anderen Wegeventils (10') jeweils die Krallen (47,48) der einen Anschlußplatte (25 bzw. 25') jeweils die Taschen (49,50) der anderen Anschlußplatte (25' bzw. 25) hintergreifen.

11. Ventil nach Anspruch 10, dadurch gekennzeichnet, daß die Krallen (47,48) und Taschen (49,50) so ausgebildet sind, daß sie nach Rückdrehen zweier um einen Drehwinkel (a) um die Längsachsen von Anschlußstutzen (34) und Anschlußbohrung (35) gegeneinander verdreht aneinandergesetzten Anschlußplatten (25,25') in Axialrichtung formschlüssig ineinanderliegen.

12. Ventil nach Anspruch 1, dadurch gekennzeichnet, daß die Verbindungsmittel auf einer Plattenseite (252) ausgebildete Rastnasen (51) und auf der anderen Plattenseite (251) ausgebildete Rastfenster (52) aufweisen und daß die Rastfenster (52) und Rastnasen (51) einander so zugeordnet sind, daß nach Ineinanderstecken von Anschlußstutzen (34) und Anschlußbohrung (35) der Anschlußplatten (25,25') zweier Wegeventile (10,10') und nach Drehen der Anschlußplatten (25,25') zur Herstellung des Formschlusses zwischen Krallen (47,48) und Taschen (49,50) die Rastnasen (51) in die zugeordneten Rastfenster (52) einrasten und die beiden Anschlußplatten (25;25') gegen Verdrehung um die Längsachsen von Anschlußstutzen (34) und Anschlußbohrung (35) festlegen.

13. Ventil nach Anspruch 1, dadurch gekennzeichnet, daß die Wicklungsenden der Magnetspule (22) des Elektromagneten (21) auf einem am Ventilgehäuse (24) von außen zugänglichen zweipoligen Stecker (30) geführt sind, der zwei Steckerstifte (28,29) aufweist.

14. Ventil nach Anspruch 13, dadurch gekennzeichnet, daß der Stecker (30) von einer Steckerhaube (76) übergriffen ist, die zwei auf die Steckerstifte (28,29) aufsteckbare Steckhülsen (77,78) aufweist, daß mehrere Steckerhauben (76) mit einer elektrischen Sammelschiene (69) verbunden sind, die eine vorzugsweise mittels Stanzgitter (75) realisierte Zahl von Leiterbahnen (71-74) aufweist, wobei jeweils eine Steckhülse (77) einer Steckerhaube (76) mit einer für alle Steckerhauben (76) gemeinsamen Leiterbahn (71) und eine Steckhülse (78) mit jeweils einer weiteren Leiterbahn (72-74) verbunden ist, und daß alle Leiterbahnen (71-74) am anderen Ende an elektrischen Kontakten eines elektrischen Anschlußsteckers (70) angeschlossen sind.

## Claims

1. Electromagnetically operated pneumatic directional control valve (10; 10') having a compressed-air system connection (11), having a vent (12) and having at least one working connection (13) for a compressed-air consumer, as well as having a valve member (20) which is operated by an electromagnet (21) and which, for the purpose of alternately blocking a working channel (17), leading to the working connection (13), with respect to the compressed-air system connection (11) and the vent (12), comes to rest alternately on one of two valve seats (18, 19) of which one is constructed on the channel opening of a supply channel (15) leading to the compressed-air system connection (11), and the other is constructed on the channel opening of a venting channel (16) leading to the vent (12), characterized in that the electromagnet (21), the valve member (20), the working channel (17), the supply and venting channels (15, 16) with their valve seats (18, 19) and the vent (12) are combined in a valve housing (24), and the connections (11, 13) of the compressed-air system and for the compressed-air consumer are positioned in a connecting plate (25; 25') which can be separated from the valve housing (24) and which is detachably connected to the valve housing (24), in that the compressed-air system connection (11) has a connecting stub (34), which is accessible on one plate side (251) of the connecting plate (25; 25'), and a connecting bore (35), which is connected to said connecting stub and is introduced on the plate side (252) of the connecting plate (25; 25') averted therefrom, which are adapted to one another such that the connecting stub (34) can be plugged in an airtight fashion into the connecting bore (35) of a second directional control valve (10; 10') with the interposition of a radially sealing O-ring (37), and in that there are arranged on each of the plate sides (251, 252) of the connecting plate (25; 25') bearing the connecting stub (34) or the connecting bore (35) connecting means which are constructed such that they correspond to one another for the purpose of producing a connection between two connecting plates (25; 25'), plugged into one another by means of connecting stub (34) and connecting bore (35), of the two directional control valves (10, 10').

2. Valve according to Claim 1, characterized in that a stepped plug-in stub (26) with two coaxial stub sections (261, 262) of different diameter is constructed on the underside (241) of the valve housing (24), and a plug-in stepped bore (38) with two coaxial bore sections (381, 382) of different diameter is constructed on the top side (253) of the connecting plate (25; 25'), in that the plug-in stub (26) can be plugged in a sealing fashion into the plug-in bore (38) with the interposition of a radially sealing O-ring (39, 40) between each stub section (261, 262) and assigned bore section (381, 382), in that the supply channel (15) ends in the circular end face of the stub section (262) of smaller diameter and the working channel (17) ends in the annular end face of the stub section (262) of larger diameter, and in that the bore section (382), of smaller diameter, of the plug-in bore (38) is connected to a connecting channel (36) which interconnects the connecting stub (34) and connecting bore (35) of the compressed-air system connection (11).

3. Valve according to Claim 2, characterized in that the bore section (381) of smaller diameter of the plug-in bore (38) is connected to the working connection (13).

4. Valve according to Claim 2, characterized in that a valve opening (58) which is sealed off by a valve plate (61) of a seating valve (57) and is connected to the working connection (13) is provided in the connecting channel (36) between the connecting stub (34) and connecting bore (35) of the compressed-air system connection (11), in that the valve plate (61) is fastened via a valve stem (60) which is fastened on a displacement piston (62) bounding a working chamber (56), and in that the bore section (381), of larger diameter, of the plug-in bore (38) is connected to the working chamber (56).

5. Valve according to Claim 4, characterized in that the seating valve (57) is integrated in a valve body (80) which is connected to the connecting plate (25') and in which there are constructed a vent (65) and a venting channel (64) which connects the vent (65) to the working connection (13) and opens out at a distance in front of the valve opening (58), and in that there is constructed at the channel opening a valve seat (66) on which the valve plate (61) comes to rest with clearance of the valve opening (58).

6. Valve according to Claim 1, characterized in that the connecting bore (35) of the compressed-air system connection (11) can be closed in the connecting plate (25; 25') by means of a closure element (53) which bears on one element side (531) connecting means which correspond to the connecting means for producing a connection which are arranged on the plate side (252) of the connecting plate (25; 25') which contains the connecting bore (35), and in that the connecting element (53) bears a pin (54) which projects into the connecting bore (35) when the closure element (53) is mounted on the connecting plate (24) and seals said bore in an airtight fashion by means of a sealing ring (37).

7. Valve according to Claim 1, characterized in that the housing (24) and the connecting plate (25; 25') can be latched to one another and provision is made for this purpose of latching holes (44) and latching noses (43) which can be clipped therein, it preferably being the case that the latching noses (43) are arranged on the circumference of the valve housing (24) and the latching holes (44) are arranged on the connecting plate (25; 25').

8. Valve according to Claim 1, characterized in that fastening means for spatially fixing the connecting plate (25; 25') are provided on a plate side of the connecting plate (25; 25') which extends between and perpendicular to the two plate sides (251, 252) bearing the connecting stub (34) and connecting bore (35), respectively.

9. Valve according to Claim 8, characterized in that the connecting means comprise a fastening plate (45) which is integrally formed, preferably in one piece, on the connecting plate (25; 25') and has two fastening eyes (46) arranged on said fastening plate in a preferably diagonal fashion.

10. Valve according to Claim 1, characterized in that the connecting means provided on mutually averted plate sides (251, 252) of the connecting plate (25; 25') comprise two projecting claws (47, 48) and two recessed pockets (49, 50), the pockets (49, 50) being constructed for holding the claws (47, 48), and in that the two claws (47, 48) and the two pockets (49, 50) on each plate side (251,252) are arranged in each case diagonally relative to one other and on both plate sides (251, 252) such that, after the connecting stub (34) of one directional control valve (10) has been plugged into the connecting bore (35) of another directional control valve (10'), in each case the claws (47, 48) of one connecting plate (25 or 25') grip the pockets (49, 50) of the other connecting plate (25' or 25) from behind in each case.

11. Valve according to Claim 10, characterized in that the claws (47, 48) and pockets (49, 50) are constructed such that they lie one inside another in a shell-closed fashion in the axial direction after the turning back of two connecting plates (25, 25') which are placed against one another in a fashion rotated with respect to one another by an angle of rotation (a) about the longitudinal axes of the connecting stub (34) and connecting bore (35).

12. Valve according to Claim 1, characterized in that the connecting means have latching noses (51) constructed on one plate side (252), and latching windows (52) constructed on the other plate side (251), and in that the latching windows (52) and latching noses (51) are assigned to one another such that, after plugging into one another the connecting stub (34) and connecting bore (35) of the connecting plates (25, 25') of two directional control valves (10, 10') and after rotating the connecting plates (25, 25') to produce the self-closure between the claws (47, 48) and pockets (49, 50), the latching noses (51) latch into the assigned latching windows (52) and fix the two connecting plates (25; 25') against rotation about the longitudinal axes of the connecting stub (34) and connecting bore (35).

13. Valve according to Claim 1, characterized in that the winding ends of the magnet coil (22) of the electromagnet (21) are guided on a two-pole plug (30) which is accessible from the outside on the valve housing (24) and which has two plug pins (28, 29).

14. Valve according to Claim 13, characterized in that the plug (30) is covered by a plug shell (76) which has two push-on sleeves (77, 78) which can be pushed onto the plug pins (28, 29), in that a plurality of plug shells (76) are connected to an electric busbar (69) which has a number of conductor tracks (71-74) which are preferably implemented by means of punched grids (75), in each case one push-on sleeve (77) of one plug shell (76) being connected to a conductor track (71) common to all plug shells (76), and one push-on sleeve (78) being connected to a further conductor track (72-74) in each case, and in that all the conductor tracks (71-74) are connected at the other end to electric contacts of an electric attachment plug (70).

## Revendications

1. Distributeur pneumatique (1O ; 10') qui peut être actionné de manière électromagnétique et qui comprend un raccordement (11) à un réseau d'air comprimé, une purge (12) et au moins un raccordement de travail (13) pour un appareil qui utilise de l'air comprimé, ainsi qu'un organe de vanne (20) actionné par un électroaimant (21), organe de vanne qui, pour obturer de façon alternative un canal de travail (17) allant au raccordement de travail (13), par rapport au raccordement (11) au réseau d'air comprimé et à la purge (12), repose sur l'un de deux sièges de vanne (18, 19) dont l'un est constitué sur l'embouchure d'un canal d'alimentation (15) allant au raccordement (11) au réseau d'air comprimé, et dont l'autre est constitué sur l'embouchure d'un canal de désaération (16) allant à la purge (12),
caractérisé en ce que
• l'électroaimant (21), l'organe de vanne (20), le canal de travail (17), le canal d'alimentation (15) et le canal de désaération (16) avec leurs sièges de vanne (18 et 19), et la purge (12), sont rassemblés dans un boîtier de vanne (24), tandis que les raccordements (11 et 13) pour le réseau d'air comprimé et pour l'appareil qui utilise de l'air comprimé sont prévus dans une plaque de raccordement (25 ; 25') qui peut être séparée du boîtier de vanne (24), plaque de raccordement (25 ; 25') qui est reliée de façon amovible au boîtier de vanne (24),
• le raccordement (11) au réseau d'air comprimé présente un ajutage de raccordement (34) qui est accessible sur l'un des côtés, le côté (251), de la plaque de raccordement (25 ; 25'), et un alésage de raccordement (35) qui est en liaison avec l'ajutage précédent et qui est prévu sur le côté (252), situé à l'opposé, de la plaque de raccordement (25 ; 25'), alésage et ajutage qui sont adaptés l'un à l'autre de telle façon que l'ajutage de raccordement (34) puisse être enfilé dans l'alésage de raccordement (35) d'un deuxième distributeur (10, 10') d'une manière étanche à l'air, en interposant un joint torique (37) assurant l'étanchéité radialement, et
• sur chacun des côtés (251, 252) de la plaque de raccordement (25 ; 25') qui portent l'ajutage de raccordement (34) ou l'alésage de raccordement (35), on dispose des moyens de liaison constitués de telle sorte qu'ils correspondent à l'établissement d'une liaison entre deux plaques de raccordement (25, 25') enfoncées l'une dans l'autre par leur ajutage de raccordement (34) et leur alésage de raccordement (35), des deux distributeurs (10, 10').

2. Distributeur selon la revendication 1,
caractérisé en ce que
• sur la face inférieure (241) du boîtier (24) du distributeur, on a constitué un ajutage d'enfichage à gradins (26) avec deux sections d'ajutage coaxiales (261, 262) de diamètres différents, et sur la face supérieure (253) de la plaque de raccordement (25 ; 25'), on a constitué un alésage d'enfichage à gradins (38) avec deux sections d'alésage (381, 382) coaxiales, de diamètres différents,
• l'ajutage d'enfichage (26) peut être enfoncé de façon étanche dans l'alésage d'enfichage (38) en interposant un joint torique (39, 40), assurant l'étanchéité radialement, entre chaque section d'ajutage (261, 262) et la section d'alésage correspondante (381, 382),
• dans la face frontale de forme circulaire de la section d'ajutage (262) de plus petit diamètre, débouche le canal d'alimentation (15) et, dans la face frontale de forme annulaire de la section d'ajutage (262) de plus grand diamètre, débouche le canal de travail (17), et
• la section d'alésage (382) de plus petit diamètre de l'alésage d'enfichage (38) est en liaison avec un canal de liaison (36) qui relie ensemble l'ajutage de raccordement (34) et l'alésage de raccordement (35) du raccordement (11) au réseau d'air comprimé.

3. Distributeur, selon la revendication 2,
caractérisé en ce que
la section d'alésage de plus grand diamètre (381) de l'alésage d'enfichage (38) est en liaison avec le raccordement de travail (13).

4. Distributeur, selon la revendication 2,
caractérisé en ce que
• dans le canal de liaison (36) qui est situé entre l'ajutage de raccordement (34) et l'alésage de raccordement (35) du raccordement (11) au réseau d'air comprimé, on prévoit un orifice de vanne (58) rendu étanche par une lame de vanne (61) d'une vanne à siège (57), orifice de vanne (58) qui est en liaison avec le raccordement de travail (13),
• la lame de vanne (61) est fixée au moyen d'un poussoir (60) fixé sur un piston de poussée (62) qui délimite une chambre de travail (56), et
• la section d'alésage de plus grand diamètre (381) de l'alésage d'enfichage (38) est en liaison avec la chambre de travail (56).

5. Distributeur, selon la revendication 4,
caractérisé en ce que
• la vanne à siège (57) est intégrée dans un corps de vanne (80) qui est relié à la plaque de raccordement (25'), corps de vanne (80) dans lequel sont constitués une purge (65) et un canal de désaération (64) qui relie la purge (65) au raccordement (13), canal de désaération (64) qui débouche librement à une certaine distance en avant de l'orifice de vanne (58), et
• sur l'embouchure du canal est constitué un siège de vanne (66) sur lequel repose la lame de vanne (61) en libérant l'orifice (58) de la vanne.

6. Distributeur, selon la revendication 4,
caractérisé en ce que
• l'on peut faire coulisser l'alésage de raccordement (35) du raccordement au réseau d'air comprimé (11) dans la plaque de raccordement (25 ; 25') au moyen d'un élément d'obturation (53) qui supporte, sur l'un de ses côtés (531), des moyens de liaison qui correspondent aux moyens de liaison, servant à établir une liaison, qui sont disposés sur le côté (252) de la plaque de raccordement (25 ; 25') qui contient l'alésage de raccordement (35), et
• l'élément d'obturation (53) porte un tenon (54) qui, lorsque l'élément d'obturation (53) est placé sur la plaque de raccordement (24), pénètre dans l'alésage de raccordement (35) et assure l'étanchéité de celui-ci au moyen d'une bague d'étanchéité (37).

7. Distributeur selon la revendication 1,
caractérisé en ce que
le boîtier (24) et la plaque de raccordement (25 ; 25') peuvent être encliquetés l'un dans l'autre et, pour cela, sont pourvus de trous d'encliquetage (44) et de nez d'encliquetages (43) que l'on peut enclipser dedans, les nez d'encliquetage (43) étant disposés de préférence sur le pourtour du boîtier (24) du distributeur, et les trous d'encliquetage (44) étant disposés de préférence sur la plaque de raccordement (25 ; 25')

8. Distributeur selon la revendication 1,
caractérisé en ce que
l'on prévoit sur un côté de la plaque de raccordement (25, 25') qui s'étend entre les deux ajutages de raccordement (34) ou entre les côtés (251 ; 252) qui portent l'alésage de raccordement (35) perpendiculairement à ceux-ci, des moyens de fixation pour fixer dans l'espace la plaque de raccordement (25 ; 25').

9. Distributeur selon la revendication 8,
caractérisé en ce que
les moyens de fixation comprennent une plaque de fixation (45) qui est formée, de préférence d'un seul tenant, sur la plaque de raccordement (25 ; 25'), avec deux oeillets de fixation (46) qui sont disposés dessus de préférence en diagonale.

10. Distributeur selon la revendication 1,
caractérisé en ce que
• les moyens de liaison prévus sur les côtés (251, 252) de la plaque de raccordement (25 ; 25'), qui sont tournés à l'opposé l'un de l'autre, comprennent deux griffes saillantes (47, 48) et deux poches (49, 50), usinées dans les côtés, les poches (49, 50) étant constituées pour recevoir les griffes (47, 48),
• dans le cas des deux griffes (47, 48) les deux poches (49, 50) sont disposées sur chaque côté (251, 252) de la plaque, respectivement en diagonale l'une par rapport à l'autre et sur les deux côtés (251, 252) de la plaque, d'une manière telle qu'après l'enfoncement de l'ajutage de raccordement (34) de l'un des distributeurs (10) dans l'alésage de raccordement (35) d'un autre distributeur (10'), les griffes (47, 48) de l'une des plaques de raccordement (25 ou 25') viennent respectivement en prise avec les poches (49, 50) de l'autre plaque de raccordement (25' ou 25) .

11. Distributeur selon la revendication 10,
caractérisé en ce que
les griffes (47, 48) et les poches (49, 50) sont constituées de telle façon qu'après la rotation en arrière des deux plaques de raccordement (25, 25') mises l'une sur l'autre, et après qu'on les ait fait tourner l'une par rapport à l'autre d'un angle de rotation (a) autour des axes longitudinaux de l'ajutage de raccordement (34) et de l'alésage de raccordement (35), ces plaques viennent en prise l'une dans l'autre par complémentarité de forme dans le sens axial.

12. Distributeur selon la revendication 1,
caractérisé en ce que
• les moyens de liaison présentent des nez d'encliquetage (51) constitués sur un côté de la plaque, le côté (252), et des fenêtres d'encliquetage (52) sont constituées sur l'autre côté de la plaque, le côté (251), et
• les nez d'encliquetage (51) et les fenêtres d'encliquetage (52) sont disposés les uns par rapport aux autres de telle sorte qu'après l'enfoncement l'un dans l'autre de l'ajutage de raccordement (34) et de l'alésage de raccordement (35) des plaques de raccordement (25, 25') de deux distributeurs (10, 10'), et après la rotation des plaques de raccordement (25, 25') pour établir un engagement par complémentarité de forme entre les griffes (47, 48) et les poches (49, 50), les nez d'encliquetage (51) s'encliquettent dans les fenêtres d'encliquetage (52) correspondantes et fixent les deux plaques de raccordement (25 ; 25') contre toute rotation autour des axes longitudinaux de l'ajutage de raccordement (34) et de l'alésage de raccordement (35).

13. Distributeur selon la revendication 1,
caractérisé en ce que
l'on fait passer les extrémités des enroulements de la bobine électromagnétique (22) de l'électroaimant (21) sur un connecteur bipolaire (30), accessible de l'extérieur, connecteur (30) qui présente deux broches d'enfichage (28 et 29).

14. Distributeur selon la revendication 13,
caractérisé en ce que
• le connecteur (30) est entouré d'un capot (76) qui présente deux douilles (77, 78) pouvant être emboîtées sur les broches de connecteur (28 et 29),
• plusieurs capots de connecteur (76) sont reliés à une barre électrique omnibus (69) qui présente un certain nombre de pistes conductrices (71 à 74) et qui est réalisé de préférence au moyen d'un grillage estampé, une douille d'enfichage (77) étant respectivement reliée à un capot (76), de connecteur par une piste conductrice (71) commune à tous les capots de connecteur (76) et une douille (78) étant reliée à respectivement une autre piste conductrice (71 à 74), et
• toutes les pistes conductrices (71 à 74) sont raccordées, par l'autre extrémité, aux contacts électriques d'un connecteur électrique de raccordement (70).
